# EUROPÄISCHE PATENTSCHRIFT

(11) **EP 1 704 350 B1**
(45) Veröffentlichungstag und Bekanntmachung des Hinweises auf die Patenterteilung: **19.03.2008**
(21) Anmeldenummer: 04803832.7
(22) Anmeldetag: 14.12.2004
(51) Int. Cl.: F16H 61/04

(54) **ANTRIEBSVORRICHTUNG MIT EINEM SCHALTGETRIEBE**
DRIVE DEVICE COMPRISING A GEARBOX
DISPOSITIF D'ENTRAINEMENT DOTE D'UNE BOITE DE VITESSES

(30) Priorität: 16.01.2004 DE 102004002283
(43) Veröffentlichungstag der Anmeldung: 27.09.2006
(73) Patentinhaber: ZF FRIEDRICHSHAFEN AG, 88038 Friedrichshafen (DE)
(72) Erfinder: DÖBELE, Bernd, 88682 Salem (DE)
(86) Internationale Anmeldenummer: PCT/EP2004/014204
(87) Internationale Veröffentlichungsnummer: WO 2005/068879

(56) Entgegenhaltungen:
- EP-A- 1 096 172
- EP-A- 1 190 887
- EP-A- 1 251 296
- DE-C1- 19 844 783
- FR-A- 2 831 234
- GB-A- 632 861
- US-A- 4 261 216
- US-A- 4 544 057
- US-A- 4 583 426

## Beschreibung

Die Erfindung betrifft eine Antriebsvorrichtung mit einem Schaltgetriebe gemäß dem Oberbegriff des Patentanspruchs 1.

Antriebsvorrichtungen mit einem Schaltgetriebe und einer beispielsweise als Brennkraftmaschine ausgebildeten Antriebsmaschine sind im Fahrzeugbau allgemein bekannt. Bei solchen Antriebsvorrichtungen steht die Antriebsmaschine in Wirkverbindung mit einer Antriebswelle, welche ihrerseits die Eingangsseite einer dem Schaltgetriebe zugeordneten Schaltkupplung antreibt. Der Abtrieb dieser Schaltkupplung ist sodann antriebstechnisch mit der Eingangswelle des Schaltgetriebes verbunden, dessen Abtrieb beispielsweise über ein Differentialgetriebe auf anzutreibende Fahrzeugräder wirkt.

Solche Schaltgetriebe sind in der Regel als Stufengetriebe ausgebildet, bei deren Betrieb es zu einer Zugkraftunterbrechung beim Gangwechsel kommt, was im übrigen auch für die sogenannten automatisierten Stufengetriebe gilt. Daraus resultiert allgemein die Anforderung, die Phasen der Zugkraftunterbrechung im Sinne eines erhöhten Fahrkomforts möglichst kurz zu halten.

Bei der Schaltung synchronisierter Getriebe ist diese Zeit bereits durch eine Erhöhung der Betätigungskräfte sowie eine Erhöhung der Leistungsfähigkeit der Synchronisiereinrichtungen verkürzt worden. Bei unsynchronisierten Getrieben ist diesbezüglich eine dementsprechende Auslegung einer sogenannten Kupplungsbremse bekannt geworden.

Da bei synchronisierten Getrieben bei Schaltvorgängen die Schaltkupplung zwischen Antriebsmaschine und Schaltgetriebe generell, und bei unsynchronisierten Getrieben bei einer Hochschaltung geöffnet wird, ergibt sich mit der erzielten Verkürzung der Zugkraftunterbrechung, also der Verkürzung der Zeitspanne für den mechanischen Gangwechsel, zunehmend das Problem, die bei Abschluss des Gangwechsels aktuell vorliegende Drehzahldifferenz über der Schaltkupplung ohne Komforteinbussen sowie gleichzeitig verschleißarm überschneidend mit dem Kupplungs- und dem Antriebsmaschinenmoment abzubauen.

Als Lösungsweg aus dieser Problematik würde es sich anbieten, mit dem Schließvorgang der Schaltkupplung erst dann zu beginnen, wenn sich die beiden an der Schaltkupplung anliegenden Drehzahlen weitestgehend angenähert haben. Diese Maßnahme läuft jedoch der bereits erzielten Verkürzung der Zeit für den mechanischen Gangwechsel entgegen.

Vor diesem Hintergrund liegt der Erfindung daher die Aufgabe zugrunde, eine Antriebsvorrichtung mit einem Schaltgetriebe derart zu gestalten, dass die Zeitspanne der Zugkraftunterbrechung bei einem Gangwechsel weiter minimiert und der Einbruch an Zugkraft verkleinert ist, und dieses Getriebe weiter zu verbessern.

Die Lösung dieser Aufgabe ergibt sich aus den Merkmalen des Patentanspruches 1, während vorteilhafte Ausgestaltungen und Weiterbildungen der Erfindung in den abhängigen Ansprüchen angegeben sind.

Demnach sieht die Erfindung gemäß Anspruch 1 einerseits vor, dass in dem Leistungsübertragungsweg von der Antriebsmaschine zu dem Schaltgetriebe zwischen der Antriebswelle und der Schaltkupplung eine Schaltbremskupplung angeordnet ist, und dass der Abtrieb der Schaltbremskupplung in Wirkverbindung mit dem Getriebeabtrieb bringbar ist.

Dieses hat den Vorteil, dass durch das Zusammenspiel der Schaltkupplung und der Schaltbremskupplung der üblicherweise durch die Öffnungsphase der Schaltkupplung bedingte Abfall an Zugkraft über die Wirkverbindung der Schaltbremskupplung mit dem Getriebeabtrieb diesem Getriebeabtrieb aufgeschaltet wird, d.h. das Antriebsmaschinenmoment stützt sich in dieser Phase am Getriebeausgang ab. Bei einem Gangwechsel werden die beiden Kupplungen sich überschneidend betrieben, wobei durch die Momentenabstützung das Antriebsmaschinenmoment auf ein durch die Schaltbremskupplung übertragbares Maß vorteilhaft reduziert wird.

Bei einer Hochschaltung in einen nächsthöheren Gang gelingt dadurch eine Absenkung der Antriebsmaschinendrehzahl um denjenigen Betrag, der sich aus der Drehzahländerung des Gangwechsels ergibt, unter gleichzeitiger Abstützung des Moments auf dem Getriebeabtrieb. Mit der erfindungsgemäßen Antriebsvorrichtung wird somit sowohl der üblicherweise in den Antriebsvorrichtungen gemäß dem Stand der Technik auftretende vollständige Einbruch der Zugkraftübertragung verhindert und die Zeitspanne mit reduzierter Zugkraft deutlich verringert.

Vorteilhafterweise kann eine sonst übliche Getriebebremse, wie beispielsweise aus DE 196 52 916 A1 bekannt, entfallen.

Es ist vorgesehen, dass das Abstützmoment über eine von der Schaltbremskupplung antreibbare Nebenwelle aufgenommen wird, welche in einem zum Schaltgetriebe vorzugsweise parallelen Momentenpfad dieses Drehmoment auf den Getriebeabtrieb überträgt.

Als Vorteil dieser Erfindung ist zur weiteren Momentenerhöhung am Getriebeabtrieb der Ort der Momenteneinleitung an diesem Getriebeabtrieb schaltbar gestaltet . Hierfür können bevorzugt der Nebenwelle Losräder zugeordnet sein, welche mittels einer Koppeleinrichtung wahlweise und wechselweise dem Getriebeabtrieb aufschaltbar sind. Dabei ist dem Schaltgetriebe eine Nachschaltgruppe, beispielsweise in Form einer Planetenradstufe zugeordnet. Die dem Schaltgetriebe unmittelbar zugeordnete Getriebeausgangswelle steht dabei in Wirkverbindung mit der Planetenradstufe, deren Abtrieb in Form einer Hauptabtriebswelle beispielsweise über ein Differentialgetriebe die Gelenkwellen eines mit dieser Antriebsvorrichtung ausgestatteten Fahrzeugs antreibt.

In konkreter Ausgestaltung der Erfindung ist vorgesehen, dass der Abtrieb der Schaltbremskupplung mit einem Losrad drehfest verbunden ist, welches auf der Antriebswelle drehbar gelagert ist. Dieses Losrad kämmt bevorzugt mit einem am Getriebegehäuse gelagerten Zwischenrad, welches außerdem mit einem Festrad auf der Nebenwelle in Zahneingriff steht.

Dem Abtrieb der Nebenwelle sind zudem zumindest zwei Losräder zugeordnet, die auf dieser gelagert sind und wahlweise sowie wechselweise über eine mechanische Koppeleinrichtung mit dem Getriebeabtrieb verbindbar sind.

Diese Koppeleinrichtung kann dann beispielsweise als Schiebemuffe ausgebildet sein.

Des Weiteren ist bei dieser Antriebsvorrichtung vorzugsweise vorgesehen, dass das dem Schaltgetriebe nahe Losrad mit einem anderen Losrad kämmt, welches mit einem auf der Getriebeausgangswelle des Schaltgetriebes befestigten Zahnrad im Zahneingriff steht. Das dem Schaltgetriebe ferne Losrad kämmt dagegen mit einem Zwischenrad, welches mit einem auf der Hauptabtriebswelle der Antriebsvorrichtung befestigten Zahnrad im Zahneingriff steht.

Eine andere Weiterbildung der Erfindung sieht vor, dass die Getriebeausgangswelle des Schaltgetriebes in Wirkverbindung mit dem Eingang einer Nachschaltgruppe steht, deren Abtrieb durch die Hauptabtriebswelle gebildet wird.

In diesem Zusammenhang kann vorgesehen sein, dass dasjenige Zwischenrad, welches mit dem auf der Hauptabtriebswelle befestigten Zahnrad kämmt, ein Planetenrad einer als Planetengetriebe ausgebildete Nachschaltstufe ist.

Zur Verdeutlichung der Erfindung ist der Beschreibung eine Zeichnung beigefügt, anhand derer ein Ausführungsbeispiel mit weiteren Merkmalen und Vorteilen nachfolgend näher erläutert wird. Darin zeigen
- Fig. 1: eine schematische Strukturansicht der erfindungsgemäßen Antriebsvorrichtung, und
- Fig. 2: den qualitativen Verlauf verschiedener Kenngrößen des Antriebsstrangs gemäß Fig. 1 über der Zeit.

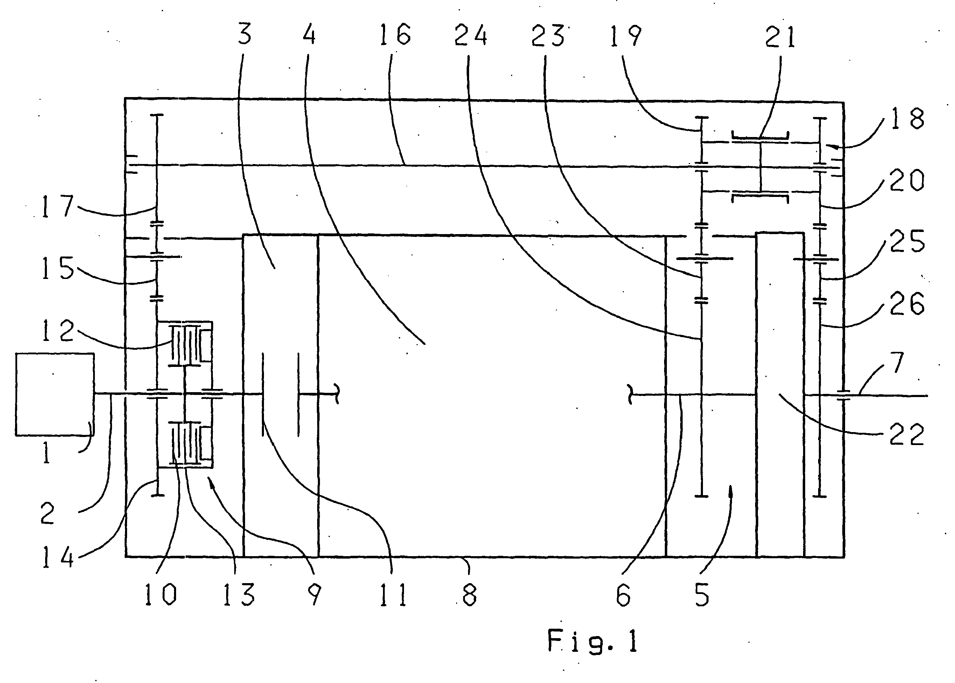

In Fig. 1 ist eine als Brennkraftmaschine 1 ausgebildete Antriebsmaschine erkennbar, welche ihr Drehmoment mittels einer Antriebswelle 2 an die Eingangsseite einer Schaltkupplung 3 weiterleitet. Diese wiederum ist einem Schaltgetriebe 4 oder auch Grundgetriebe zugeordnet, welches einen bekannten und daher hier nicht näher erläuterten Aufbau aufweist. Ein solches Schaltgetriebe kann auch als automatisiertes Schaltgetriebe ausgebildet sein. Ein Getriebeabtrieb 5 weist zudem eine Getriebeausgangswelle 6 und eine Hauptabtriebswelle 7 auf.

Die zuvor bezeichneten Bauteile sind mit Ausnahme der Brennkraftmaschine 1 innerhalb eines Gehäuses 8 baulich vereinigt. Zwischen der Antriebswelle 2 und der auch als Anfahrkupplung dienenden Schaltkupplung 3 ist eine Schaltbremskupplung 9 angeordnet, wobei die Antriebswelle 2 ein radial inneres Lamellenpaket 10 der Schaltbremskupplung 9 permanent antreibt. Die Antriebswelle 2 ist axial durch die Schaltbremskupplung 9 hindurchgeführt und wirkt permanent auf eine eingangsseitige Kupplungsfläche 11 der Schaltkupplung 3.

Ein radial äußeres Lamellenpaket 12 der Schaltbremskupplung 9 ist drehfest in einem Kupplungsgehäuse 13 angeordnet, welches ein koaxial zur Antriebswelle 2 angeordnetes Zahnrad 14 antreibt. Dieses Zahnrad 14 steht im Eingriff mit einem am Gehäuse 8 abgestützten Zwischenrad 15, welches mit einem drehfest auf einer Nebenwelle 16 angeordneten Antriebsrad 17 kämmt. Diese Nebenwelle 16 ist im Gehäuse 8 drehbar gelagert.

An dem dem Antriebsrad 17 gegenüberliegenden Ende der Nebenwelle 16 ist deren Abtrieb 18 dem Getriebeabtrieb 5 zugeordnet. Zu diesem Zweck sind zwei Losräder 19, 20 auf der Nebenwelle 16 gelagert. Eine mit der Nebenwelle 16 drehfest und axial verschiebbar verbundene Koppeleinrichtung 21 ist wahlweise bzw. wechselweise mit einem der Losräder 19, 20 in Eingriff bringbar.

Zwischen der Getriebeausgangswelle 6 und der Hauptabtriebswelle 7 ist eine als Planetenradstufe ausgebildete Nachschaltgruppe 22 angeordnet. Das in diesem Beispiel links neben der Koppeleinrichtung 21 angeordnete Losrad 19 greift in ein Zwischenrad 23 ein, welches seinerseits mit einem drehfest auf der Getriebeausgangswelle 6 angeordneten Zahnrad 24 kämmt, während das andere Losrad 20 über ein Zwischenrad 25 mit einem drehfest auf der Hauptabtriebswelle 7 angeordneten Zahnrad 26 im Zahneingriff steht. Das Zwischenrad 25 ist vorzugsweise ein Planetenrad der Planetenradstufe.

Die Funktionsweise der Antriebsvorrichtung ist nun folgende:

Bei laufender Brennkraftmaschine 1, geöffneter Schaltbremskupplung 9 und geschlossener Schaltkupplung 3 wird die Antriebsleistung von der Antriebswelle 2 über die Schaltkupplung 3 in das Schaltgetriebe 4 übertragen und von dort nach der Drehmomentwandlung über die Getriebeausgangswelle 6 einem nicht gezeigten Sonnenrad der Nachschaltgruppe 22 aufgeprägt. Über das Zwischenrad 25 erfolgt der Abtrieb aus der Nachschaltgruppe 22 auf die Hauptabtriebswelle 7.

Für den Fall eines Gangwechsels in dem Schaltgetriebe 4 zu einem höheren Gang läuft folgendes ab. Während die Schaltkupplung 3 öffnet, wird die Schaltbremskupplung 9 überschneidend zugefahren, wodurch es zu einer Reibkraftübertragung innerhalb der Schaltbremskupplung 9 kommt und demzufolge ein Momentenfluss über die Nebenwelle 16 erfolgt. Am Abtrieb 18 der Nebenwelle 16 ist über die Koppeleinrichtung 21 entweder das Losrad 19 oder das Losrad 20 in den Momentenfluss eingekoppelt. In beiden Fällen stützt sich das an der Nebenwelle 16 anliegende Drehmoment auf dem Getriebeabtrieb 5 ab. Hierdurch wird das Antriebsmaschinenmoment reduziert und die Drehzahl der Antriebswelle 2 um denjenigen Betrag reduziert, der der Drehzahländerung aus dem aktuellen Gangsprung entspricht.

Mit Abschluss des Schaltvorganges übernimmt die sich schließende Anfahrkupplung 3 überschneidend mit der öffnenden Schaltbremskupplung 9 das Antriebsmaschinendrehmoment derart, dass nach Abschluss des Schaltvorganges der gesamte Drehmomentenfluss unter Umgehung der Nebenwelle 16 erfolgt.

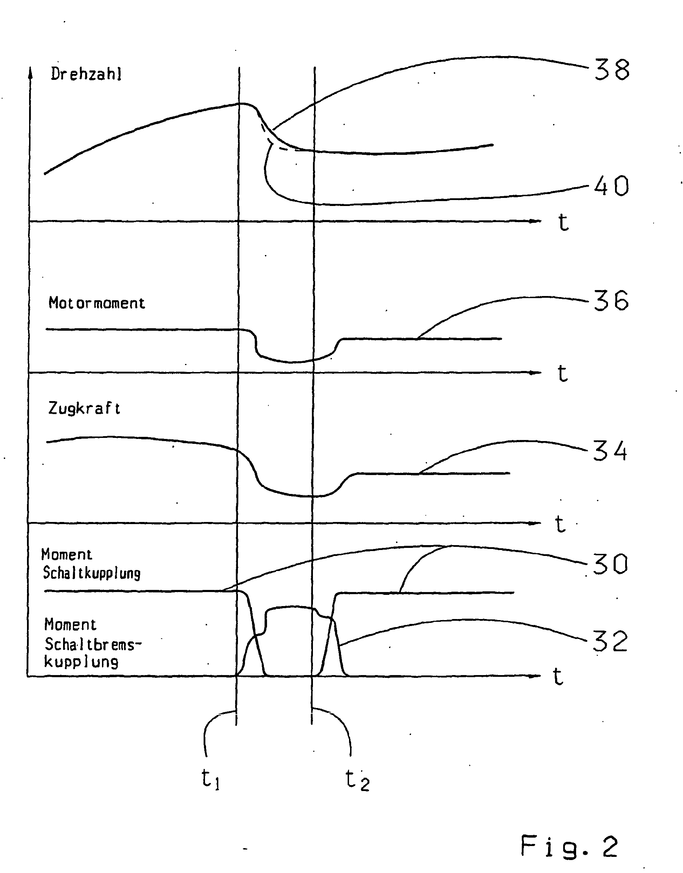

Zur Verdeutlichung der Zusammenhänge sind in Fig. 2 die zeitlichen Verläufe einiger antriebsvorrichtungsrelevanter Größen relativ zueinander dargestellt.

Auf den Horizontalachsen ist jeweils die Zeit t aufgetragen, wobei die Zeitpunkte t1 bzw. t2 den Beginn bzw. das Ende eines mechanischen Gangwechselvorganges darstellen.

Unten beginnend in Fig. 2 sind zunächst der Verlauf des über die Schaltkupplung 3 geführten Drehmoments mit einer Kurve 30 und das entsprechende Moment über der Schaltbremskupplung 9 mit einer Kurve 32 dargestellt. Deutlich sichtbar ist die zwischen t1 und t2 liegende Überschneidungphase der beiden Kupplungen 3, 9.

Bis zum Zeitpunkt t1, dem Start des mechanischen Schaltvorganges, erfolgt der Momentenfluss über die geschlossene Schaltkupplung 3, deren übertragenes Moment nach dem Zeitpunkt t1 durch gesteuertes, schlupfbehaftetes Öffnen bis auf einen Wert gleich oder nahe Null abgebaut wird. Nahezu im gleichen Maße übernimmt die Schaltbremskupplung 9 durch gesteuertes, schlupfbehaftetes Zufahren ein steigendes Drehmoment. Zum Zeitpunkt t2, dem Ende des mechanischen Schaltvorganges, übernimmt die Schaltkupplung 3 erneut Drehmoment, während das über die Schaltbremskupplung 9 übertragene Drehmoment abgebaut wird.

Die in Fig. 2 darüber liegend gezeigte Kurve 34 stellt den Verlauf der Zugkraft dar, während die Kurve 36 den Verlauf des Brennkraftmaschinendrehmomentes wiedergibt.

Die Kurven 38 bzw. 40 stellen den Verlauf der Antriebsmaschinendrehzahl bzw. der Schaltgetriebedrehzahl im Falle einer Hochschaltung dar, wobei der Verlauf der Kurve 40 gestrichelt gezeichnet ist. Nur im Zeitintervall zwischen den Zeitpunkten t1 und t2 weichen diese beiden Kurven 38, 40 voneinander ab.

Aus dem Verlauf der Kurve 34 ist gut erkennbar, dass durch die Überschneidung der Momentenverläufe 30 und 32 zwar die Zugkraft vermindert ist, jedoch vorteilhaft nicht vollständig einbricht.

### Bezugszeichen

- 1: Brennkraftmaschine
- 2: Antriebswelle
- 3: Schaltkupplung
- 4: Schaltgetriebe
- 5: Getriebeabtrieb
- 6: Getriebeausgangswelle
- 7: Hauptabtriebswelle
- 8: Gehäuse
- 9: Schaltbremskupplung
- 10: Lamellenpaket
- 11: Kupplungsfläche
- 12: Lamellenpaket
- 13: Kupplungsgehäuse
- 14: Zahnrad
- 15: Zwischenrad
- 16: Nebenwelle
- 17: Antriebsrad
- 18: Abtrieb
- 19: Losrad
- 20: Losrad
- 21: Koppeleinrichtung
- 22: Nachschaltgruppe
- 23: Zwischenrad
- 24: Zahnrad
- 25: Zwischenrad
- 26: Zahnrad
- 30: Kurve Schaltkupplungsmoment
- 32: Kurve Schaltbremskupplungsmoment
- 34: Kurve Zugkraft
- 36: Kurve Brennkraftmaschinenmoment
- 38: Kurve Antriebsmaschinendrehzahl
- 40: Kurve Schaltgetriebedrehzahl

- t: Zeit
- t1: Zeitpunkt
- t2: Zeitpunkt

## Patentansprüche

1. Antriebsvorrichtung mit einem Schaltgetriebe (4), mit einer mit einer Antriebsmaschine in Wirkverbindung stehenden Antriebswelle (2), einer zwischen dieser Antriebswelle (2) und einer Eingangswelle des Schaltgetriebes (4) angeordneten, permanent mit der Antriebswelle (2) verbundenen Schaltkupplung (3), mit einem Getriebeabtrieb (5), und mit einer zwischen Antriebswelle (2) und Schaltkupplung (3) angeordneten Schaltbremskupplung (9), deren Abtrieb in Wirkverbindung mit dem Getriebeabtrieb (5) bringbar ist und dem Abtrieb der Schaltbremskupplung (9) eine von dieser antreibbare Nebenwelle (16) und der Abtrieb (18) der Nebenwelle (16) dem Getriebeabtrieb (5) zugeordnet ist, **dadurch gekennzeichnet, dass** der Abtrieb der Schaltbremskupplung (9) mit einem Losrad (14) drehfest verbunden ist, welches auf der Antriebswelle (2) gelagert ist, und dem Abtrieb (18) der Nebenwelle (16) zumindest zwei Losräder (19, 20) zugeordnet sind, welche auf der Nebenwelle (16) gelagert sind und wahlweise und wechselweise über eine Koppeleinrichtung (21) mit dem Getriebeabtrieb (5) verbindbar sind.

2. Antriebsvorrichtung nach Anspruch 1, **dadurch gekennzeichnet, dass** das mit dem Abtrieb der Schaitbremskuppiung (9) drehfest verbundene Losrad (14) mit einem am Getriebegehäuse (8) gelagerten Zwischenrad (15) kämmt, welches außerdem mit einem Festrad (17) auf der Nebenwelle (16) in Zahneingriff steht.

3. Antriebsvorrichtung nach Anspruch 1 oder 2, **dadurch gekennzeichnet, dass** das dem Schaltgetriebe (4) nahe Losrad (19) mit einem Losrad (23) kämmt, weiches mit einem auf der Getriebeausgangswelle (6) des Schaltgetriebes (4) befestigten Zahnrad (24) im Zahneingriff steht.

4. Antriebsvorrichtung nach einem der Ansprüche 1 bis 3, **dadurch gekennzeichnet, dass** das dem Schaltgetriebe (4) ferne Losrad (20) mit einem Zwischenrad (25) kämmt, weiches mit einem auf der Hauptabtriebswelle (7) der Antriebsvorrichtung befestigten Zahnrad (26) im Zahneingriff steht.

5. Antriebsvorrichtung nach einem der vorherigen Ansprüche, **dadurch gekennzeichnet, dass** die Getriebeausgangswelle (6) in Wirkverbindung mit dem Eingang einer Nachschaltgruppe (22) steht, deren Abtrieb durch die Hauptabtriebswelle (7) gebildet ist.

6. Antriebsvorrichtung nach einem der vorherigen Ansprüche, **dadurch gekennzeichnet, dass** das mit dem auf der Hauptabtriebswelle (7) befestigten Zahnrad (26) kämmende Zwischenrad (25) als Planetenrad einer als Planetengetriebe ausgebildeten Nachschaltstufe (22) ausgebildet ist.

7. Antriebsvorrichtung nach einem der vorherigen Ansprüche, **dadurch gekennzeichnet, dass** die Nebenwelle (16) im Getriebegehäuse (8) gelagert ist und dass die abtriebsseitige Koppeleinrichtung (21) als Schiebemuffe ausgebildet ist.

## Claims

1. The invention relates to a driving device with a manual transmission (4), with a drive shaft (2) which is actively linked to a driving engine, with a shift clutch (3) which is arranged between this drive shaft (2) and an input shaft of the manual transmission (4) and is permanently linked to the drive shaft (2), with a transmission output (5), and with the drive shaft (2) and the shift clutch (3) having a shift/brake clutch (9) arranged between them, the output of which can be made to establish an active connection with the transmission output (5), and with the output of the shift/brake clutch (9) having an auxiliary shaft (16) assigned to it, which it can drive, and the output (18) of the auxiliary shaft (16) being assigned to the transmission output (5), **characterized in that** the output of the shift/brake clutch (9) is nonrotationally connected to an idler gear (14), which is supported on the drive shaft (2), and **in that** the output (18) of the auxiliary shaft (16) has at least two idler gears (19, 20) assigned to it, which are supported on the auxiliary shaft (16) and can optionally and alternately be connected to the transmission output (5) by means of a coupling device (21).

2. A driving device according to claim 1, **characterized in that** the idler gear (14), which is nonrotationally linked to the output of the shift/brake clutch (9), meshes with an intermediate gear (15), which is supported on the transmission housing (8), with the intermediate gear (15) also meshing with a fixed gear (17) on the auxiliary shaft (16).

3. A driving device according to claim 1 or 2, **characterized in that** the idler gear (19) which is close to the manual transmission (4) meshes with an idler gear (23) which meshes with a gearwheel (24) which is fixed to the transmission output shaft (6) of the manual transmission (4).

4. A driving device according to one of the claims 1 through 3, **characterized in that** the idler gear (20) which is further away from the manual transmission (4) meshes with an intermediate gear (25) which meshes with a gearwheel (26) which is fixed to the main output shaft (7) of the driving device.

5. A driving device according to one of the preceding claims, **characterized in that** the transmission output shat (6) is actively connected to the input of a rear-mounted unit (22), the output of which is formed by the main output shaft (7).

6. A driving device according to one of the preceding claims, **characterized in that** the intermediate gear (25) which meshes with the gear (26) which is fixed to the main output shaft (7) is designed as a planetary gear of a planetary-type rear-mounted unit (22).

7. A driving device according to one of the preceding claims, **characterized in that** the auxiliary shaft (16) is supported in the transmission housing (8) and that the output-end coupling device (21) is a sliding sleeve.

## Revendications

1. Dispositif d'entraînement doté d'une boîte mécanique (4), d'un arbre d'entrée (2) lié activement à un moteur d'entraînement, d'un embrayage de changement de vitesses (3) lié en permanence à l'arbre d'entrée (2) disposé entre cet arbre d'entrée (2) et un arbre d'entrée de la boîte mécanique (4), d'une sortie de la boîte de vitesses (5), et d'un embrayage de changement de vitesses et de retenue (9) disposé entre l'arbre d'entrée (2) et l'embrayage de changement de vitesses (3), dont la sortie peut être liée activement avec la sortie de la boîte de vitesses (5) et à la sortie de l'embrayage de changement de vitesses et de retenue (9) est associé un arbre intermédiaire (16) qui peut être entraîné par l'embrayage de changement de vitesses et de retenue (9) et la sortie (18) de l'arbre intermédiaire (16) est associé à la sortie de la boîte de vitesses (5), **caractérisé en ce que** la sortie de l'embrayage de changement de vitesses et de retenue (9) est liée solidaire en rotation au pignon fou (14) logé sur l'arbre d'entrée (2), et **en ce que** à la sortie (18) de l'arbre intermédiaire (16) sont associés au moins deux pignons fous (19, 20), qui sont logés sur l'arbre intermédiaire (16) et qui peuvent être liés au choix et réciproquement, par l'intermédiaire d'un dispositif de couplage (21), à la sortie de la boîte de vitesses (5).

2. Dispositif d'entraînement selon la revendication 1, **caractérisé en ce que** le pignon fou (14) lié de façon solidaire en rotation avec la sortie de l'embrayage de changement de vitesses et de retenue (9) engrène avec une roue intermédiaire (15) logée au niveau du carter de la boîte de vitesses (8), sachant que cette roue intermédiaire engrène, en outre, avec un pignon fixe (17) sur l'arbre intermédiaire (16).

3. Dispositif d'entraînement selon la revendication 1 ou 2, **caractérisé en ce que** le pignon fou (19) disposé à proximité de la boîte mécanique (4) engrène avec un pignon fou (23) qui engrène avec un engrenage (24) fixé sur l'arbre de sortie (6) de la boîte mécanique (4).

4. Dispositif d'entraînement selon une des revendications 1 à 3, **caractérisé en ce que** le pignon fou (20) distant de la boîte mécanique (4) engrène avec une roue intermédiaire (25) qui engrène avec un engrenage (26) fixé sur l'arbre de sortie principal (7) du dispositif d'entraînement.

5. Dispositif d'entraînement selon une des revendications précédentes, **caractérisé en ce que** l'arbre de sortie de la boîte de vitesses (6) est lié activement à l'entrée d'un groupe-relais monté en aval (22), dont la sortie est formée par l'arbre de sortie principal (7).

6. Dispositif d'entraînement selon une des revendications précédentes, **caractérisé en ce que** la roue intermédiaire (25) engrenant avec l'engrenage (26) fixé sur l'arbre de sortie principal (7) est réalisée comme satellite d'un train d'engrenages monté en aval (22) réalisé comme boîte épicycloïdale.

7. Dispositif d'entraînement selon une des revendications précédentes, **caractérisé en ce que** l'arbre intermédiaire (16) est logé dans le carter de la boîte de vitesses (8) et **en ce que** le dispositif de couplage du côté sortie (21) est réalisé comme manchon baladeur.
